# EUROPEAN PATENT APPLICATION

(11) **EP 3 185 571 A1**
(43) Date of publication of application: **28.06.2017**
(21) Application number: 15307097.4
(22) Date of filing: 22.12.2015
(51) Int. Cl.: H04N 21/434, G06T 5/00, H04N 21/81, H04N 21/845, H04N 19/46

(54) **HIERARCHICAL SCENE SEGMENTATION METADATA TRANSMISSION FOR CONTENT ENHANCEMENT**

(71) Applicant: Thomson Licensing, 92130 Issy-les-Moulineaux (FR)
(72) Inventor: DEMARTY, Claire-Hélène, 35576 Cesson-Sévigné (FR); OISEL, Lionel, 35576 Cesson-Sévigné (FR); CHEVALLIER, Louis, 35576 Cesson-Sévigné (FR)
(74) Representative: Huchet, Anne

(57) **Abstract**

Metadata-based video enhancements may be used to enhance video in various different ways by affecting different aspects of video at rendering time (e.g., color, transitions, blur, sharpness, object identification, etc.). When limitations in bandwidth and/or receiving device capabilities are present, a hierarchical segmentation and ranking of metadata may be provided via association tables (220) so that appropriate enhancements may be applied to video images at rendering time. The metadata segmentation may be evaluated based on extracted scene segmentation (210) of the corresponding content.

## Description

### BACKGROUND

Video on demand (VOD) may be transmitted in different formats to various different devices (e.g., television sets, computers, mobile devices, etc.). Each device may have different display criteria and capabilities for rendering content and may also face limitations in the bandwidth available to receive such content. Accordingly, different devices may require different encoded streams of the same content for standard and/or high quality presentation at the device.

One solution to deliver VOD content using a common stream to various different devices is to transmit content with associated metadata. This metadata may be used to enhance the quality of received content based on various criteria. For example, a device may receive metadata to enhance the VOD content for that particular device's capabilities (e.g., wider color space, higher resolutions, sharpening, etc.). In another scenario, metadata may be used to simply provide further efficiencies in a data stream by allowing a compressed video stream with lower bandwidths (e.g., broadcast channels) to be sent with associated metadata, where the metadata can be utilized during rendering to improve the quality of the images.

Accordingly, rendering at the device may greatly benefit from the use of content-based metadata. For example, metadata indicating the blur level of a given content may help adapt the sharpening process of content at rendering time. However, it may not always be possible to perform metadata extraction in some scenarios due to the introduction of latency in the process or because the device may not have the required computation power to extract the targeted metadata. Accordingly, all the different types of metadata-based enhancements that might accompany a video stream may not be able to be transmitted and/or used during rendering.

Thus, it must be appreciated that metadata-based enhancements consider possible latency and device capabilities and be able to provide a mechanism so that the most important and/or relevant metadata-based enhancements among all potential metadata-based enhancements are differentiated for use during rendering.

### SUMMARY

Some embodiments provide a method and apparatus for hierarchical scene segmentation of metadata-based enhancements of video content. Scenes within video content may be extracted based on a plurality of criteria and an association table that includes rankings of metadata segmentations may be defined. Then metadata segmentations based on available bandwidth may be selected. The selected metadata-based enhancements may then be provided to a receiving device to execute the most appropriate metadata-based enhancements at rendering time.

The preceding Summary is intended to serve as a brief introduction to various features of some exemplary embodiments. Other embodiments may be implemented in other specific forms without departing from the scope of the disclosure.

### BRIEF DESCRIPTION OF THE SEVERAL VIEWS OF THE DRAWINGS

The exemplary features of the disclosure are set forth in the appended claims. However, for purpose of explanation, several embodiments are illustrated in the following drawings.
**Figure 1** illustrates one embodiment of a process for metadata based rendering according to some embodiments;
**Figure 2** illustrates a metadata segmentation process according to some embodiments;
**Figure 3** illustrates an exemplary software architecture of hierarchical metadata segmentation application;
**Figure 4** illustrates a schematic block diagram of an exemplary computer system used to implement some embodiments.

### DETAILED DESCRIPTION

The following detailed description describes currently contemplated modes of carrying out exemplary embodiments. The description is not to be taken in a limiting sense, but is made merely for the purpose of illustrating the general principles of some embodiments, as the scope of the disclosure is best defined by the appended claims.

Various features are described below that can each be used independently of one another or in combination with other features. Broadly, some embodiments generally provide a method and apparatus to perform a hierarchical scene segmentation for metadata-based enhancements. More particularly, when video is rendered with metadata-based enhancements, a method and apparatus is provided that is capable of providing the most appropriate metadata-based enhancements in a hierarchical approach that depends on scenes attributes.

Metadata-based video enhancements may be used to enhance video in various different ways by affecting different aspects of video at rendering time (e.g., color, transitions, blur, sharpness, object identification, etc.). Providing global metadata-based enhancements may not be possible in all scenarios, therefore segmentation of metadata per temporal segments may be more appropriate to allow for prioritization of metadata enhancements for each temporal segment of video.

According to some embodiments, such metadata may be provided based on scenes and/or types of available metadata since different scenes of video may require a great variation in types of metadata-based enhancements to perform. Since metadata can affect so many different aspects and/or characteristics of video rendering and different metadata may be applied to different parts of video images, there may be scenarios where processing of metadata-based enhancements introduce latency at rendering or the computational power at the rendering device is inadequate to achieve the video enhancements. Additionally, the amount of metadata that could be sent may depend on the available bandwidth, and therefore sending all available metadata may not be possible.

For example, one may consider that metadata-based enhancements for two successive scenes may significantly vary depending on different values of a given characteristic of how each scene is shot. In the first scene, a sharpening enhancement may be applied at rendering time according to a blur level computed for a fast moving segment/scene while the scene immediately thereafter may be a still scene that may require higher color depth over blur enhancements applied for the preceding fast moving scene. Moreover, device capability may vastly differ and one metadata-based enhancement may not be applicable for a particular device over another, therefore transmitting unusable metadata would not benefit the output at rendering.

Accordingly, some embodiments of the present disclosure may provide a global system that includes building a hierarchical segmentation of metadata and, depending on the available bandwidth and/or receiver capability, transmitting some of these segmentations so the receiving device may be able to choose the most appropriate characteristic to enhance among the available metadata segmentations.

In some embodiments, the metadata may be pre-processed offline, aggregated to a corresponding encoded stream through supplemental enhancement information (SEI) messages, and finally exploited at the client side in the context of image enhancement. For example, in some embodiments the metadata would be used by an image enhancement module (i.e. hardware, software, and/or any combination thereof) on a client receiving device to improve the quality of images. Therefore, associated image enhancement modules may complement the metadata extraction process, and enhancement processes and/or algorithms may be developed in conjunction with the development of metadata extraction. **Fig**. **1** illustrates one embodiment of a process 100 for metadata based rendering according to some embodiments.

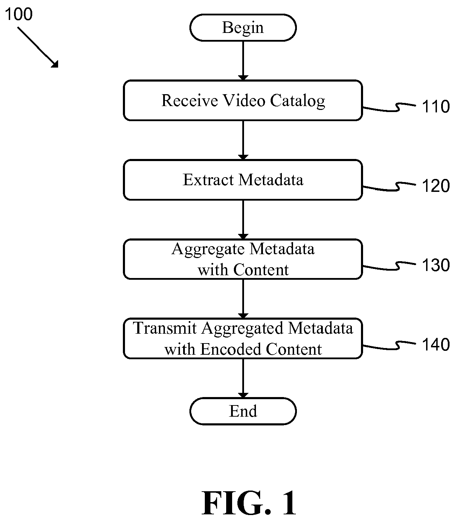

As illustrated in **Fig. 1****,** an exemplary process 100 may first receive (at 110) a video catalog. This video catalog may include several pieces of content that may be transmitted to client devices as part of a VOD service, for example. The process 100 may then extract (at 120) metadata related to each piece of content in the video catalog. Once the metadata has been extracted, the metadata may be aggregated (at 130) with its corresponding piece of encoded content on a physical storage medium by the VOD service. For example, some embodiments may implement metadata aggregation via SEI messages at or before transmission of the content to one or more client devices. The process 100 may then transmit (at 140) the aggregated metadata with corresponding content to client devices. The client device may then be able to perform metadata-based rendering of the content. Accordingly, depending on the computation power available at the client device, latency in rendering, and/or available bandwidth, all possible metadata-enhancements may not be usable for every scene in the video.

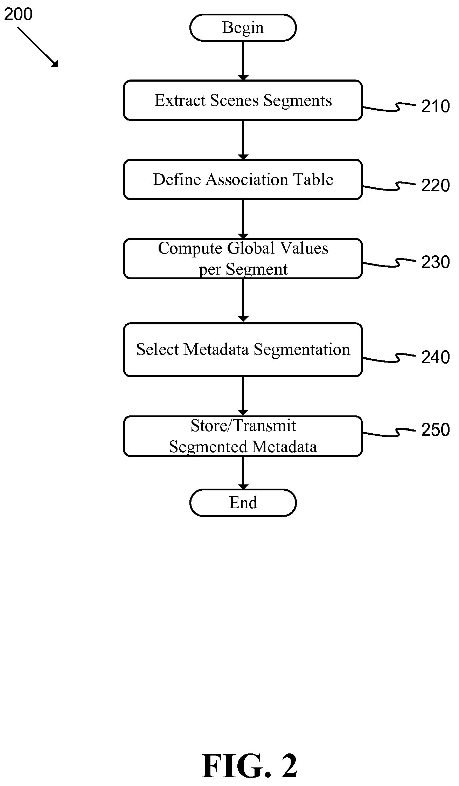

According to some embodiments, a global metadata-extraction process is provided where metadata is organized in a segmented, hierarchical fashion for use at rendering time. **Fig. 2** may be referenced to illustrate a metadata segmentation process according to some embodiments. As shown the process 200 may begin by extracting (at 210) different scene segmentations of a piece of content according to different criteria, e.g., classic shot segmentation (based on camera changes), scene segmentation based on color homogeneity, object-based segmentation, scene segmentation based on motion, etc. A default segmentation may also be defined which can be applied in all cases, i.e., whatever the metadata or the enhancement process. For example, a default segmentation may be the classic shot segmentation.

Alternatively, each segmentation can be a super-set of the default segmentation e.g., each segmentation contains at least all the shot boundaries, in the case of the default segmentation being the segmentation into shots. This alternative can be useful to provide a scalable version of the segmentations (where segmentation refinements are sent, if possible, otherwise a default segmentation is used).

Next, the process 200 may define (at 220) an association table of segmentation. This association table may take one of at least two forms. A first embodiments may, for each video characteristic which may need enhancement at rendering time (e.g., gamut enhancement), create a ranking of the available segmentations from the most appropriate enhancement for a given characteristic to the least appropriate. This part may be performed a single time, independently of the transmission of any content.

Alternatively, some embodiments may define (at 220) a ranking, based on the current content, of available segmentations that is most appropriate to the least appropriate for the content itself (e.g., if the content contains lots of motion and no blur issue, some segmentation based on motion will be priority). Advantageously at this step, additional segmentations may also be created from a mixture along a time period of the available segmentations, which is still dependent on the content itself. It may also be possible that some motion segmentation may be more appropriate at the beginning of the content scene and some color segmentation may be better at the end of the scene. In such scenarios, mixed segmentations may also be ranked with the others from the most appropriate to the least appropriate. As such, some embodiments may also define (at 220) an association table that includes rankings based on both enhancement characteristic and the content itself.

In some embodiments, the process 200 may compute (at 230) one global value per each of all the metadata-based image characteristic enhancements within a segmentation. For example, a global segment value may be the averaged value of a particular characteristic over each segment. Advantageously, each characteristic may be computed for each frame independently one time, and the aggregation of these frame values may be done for each possible segmentation thereafter. This global value may then be used by some embodiments in deciding which video characteristics to enhance for any given scene based on the available metadata.

Next, the process 200 may select (at 240), based on available bandwidth and/or device capabilities, what metadata segmentations to transmit with the content. The selection may occur based on i) the content itself, ii) a priori ranking of metadata segments (e.g., depending on targeted devices and/or device manufacturers), or iii) a ranking of the enhancements to be done at rendering time which may be a mixture of all segmentations identified at 220.

In some embodiments, when metadata is selected based on a priori ranking of metadata segments or ranking of specific enhancements, and the association table created at 220 contain ranking of segmentations based on the content itself, a sub-part of the association table may be transmitted as metadata via SEI messages so only relevant, ranked metadata segments are transmitted.

Finally, the process 200 may store (at 250) the segmented metadata on a non-transitory physical storage medium and/or transmit the segmented metadata alongside its corresponding video stream. Some embodiments may store or transmit the metadata using SEI messages in the corresponding encoded video stream.

When the segmented metadata is received at the client device, the client may already have access to the global association table of characteristics and information about the ranked segmentation via SEI messages. By referencing the association table, the receiving device may be able to enhance characteristics of images by searching the received segmentations for the most appropriate enhancement and use the particular segmented metadata for content enhancement. The selected enhancement may be based on the characteristics available for enhancement or enhancements that would most benefit the content itself.

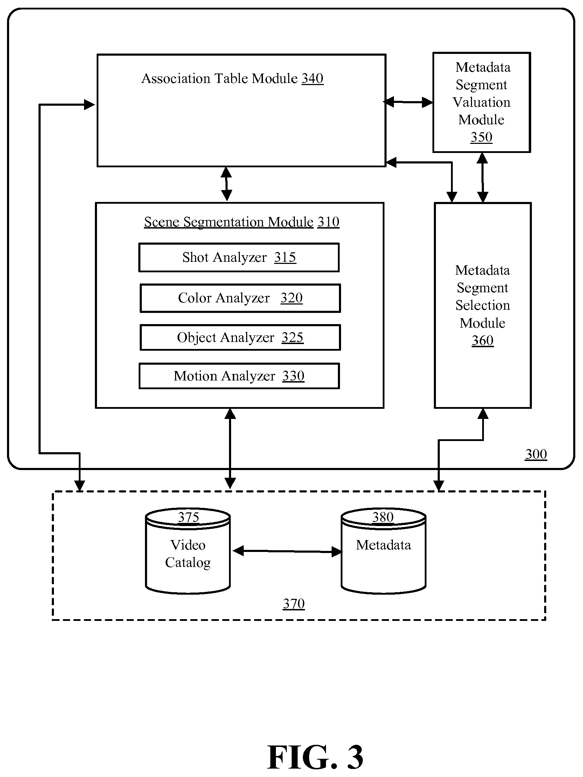

In some embodiments, the above-described operations may be implemented as software running on a particular machine such as a server, desktop computer, laptop, or similar device, or as software stored in a computer readable medium. **Figure 3** illustrates a software architecture of a hierarchical metadata segmentation application 300 in accordance with some embodiments. In some embodiments, the application is a stand-alone application or is integrated into another application (for instance, application 300 might be a portion of a professional network application), while in other embodiments the application might be implemented within an operating system. Furthermore, in some embodiments, the application is provided as part of a server-based (e.g., web-based) solution. In some such embodiments, the application is provided via a thin client. That is, the application runs on a server while a user interacts with the application via a separate client machine remote from the server (e.g., via a browser on the client machine). In other such embodiments, the application is provided via a thick client. That is, the application is distributed from the server to the client machine and runs on the client machine. In still other embodiments, the components (e.g., engines, modules) illustrated in **Fig. 3** are split among multiple applications. For instance, in some embodiments, one application may identify and extract scene segmentations, while another application defines an association table with rankings for metadata segments.

As shown in **Fig. 3****,** the application 300 may include a scene segmentation module 310, an association table module 340, a metadata segment valuation module 350, and a metadata selection module 360. The scene segmentation module 310 may interact with storage devices 370 that include a video catalog 375 and associated metadata 380. The scene segmentation module 310 may include several content analyzers including a shot analyzer 315, color analyzer 320, object analyzer 325, and motion analyzer 330 in order to divide the content into several scenes that may be used to categorize and rank characteristics that may be enhanced using metadata.

The scene segmentation module 310 may be able to communicate with the association table module 340 to provide temporal segments for which different metadata may be ranked at the association table module 340 from most important to least important based on characteristics to be enhanced or by characteristics of the video content itself. Once the image characteristics are ranked, a metadata segment valuation module 350 may provide a global value of each metadata segment and/or characteristic that the association table has defined.

A metadata segment selection module 360 may be communicatively coupled to the association table module 340 and/or the metadata segment valuation module 350 in order to select the most appropriate metadata segmentation to transmit from the metadata storage 380 when providing video content to a receiving device.

It should be recognized by one of ordinary skill in the art that any or all of the components of the hierarchical metadata segmentation software 300 may be used in conjunction with the present disclosure. Moreover, one of ordinary skill in the art will appreciate that many other configurations may also be used in conjunction with the present disclosure or components of the present disclosure to achieve the same or similar results.

In some embodiments, the process described above may be implemented completely using electronic circuitry that may include various sets of devices or elements (e.g., sensors, logic gates, analog to digital converters, digital to analog converters, comparators, etc.). Such circuitry may be able to perform functions and/or features that may be associated with various software elements used to perform the above described method.

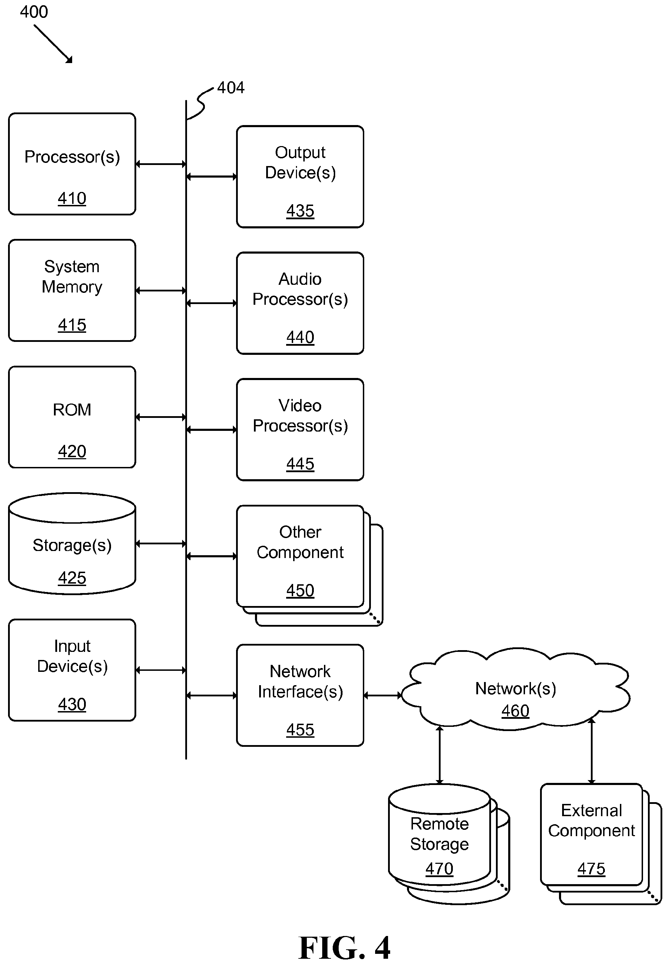

**Fig. 4** illustrates a schematic block diagram of an exemplary computer system 400 used to implement some embodiments. The computer system 400 may be implemented in a video encoder or decoder, a computing apparatus used to extract metadata from video, aggregate metadata into an encoded stream via SEI messages, or a client device that interprets metadata during rendering of images. For example, the processes described in reference to **Figures 1** and **2** may be at least partially implemented using sets of instructions that are executed using computer system 400.

Computer system 400 may be implemented using various appropriate devices. For instance, the computer system may be implemented using one or more personal computers (PCs), servers, mobile devices (e.g., a smartphone), tablet devices, and/or any other appropriate devices. The various devices may work alone (e.g., the computer system may be implemented as a single PC) or in conjunction (e.g., some components of the computer system may be provided by a mobile device while other components are provided by a tablet device).

As shown, computer system 400 may include at least one communication bus 405, one or more processors 410, a system memory 415, a read-only memory (ROM) 420, permanent storage devices 425, input devices 430, output devices 435, audio processors 440, video processors 445, various other components 450, and one or more network interfaces 455.

Bus 405 represents all communication pathways among the elements of computer system 400. Such pathways may include wired, wireless, optical, and/or other appropriate communication pathways. For example, input devices 430 and/or output devices 435 may be coupled to the system 400 using a wireless connection protocol or system.

The processor 410 may, in order to execute the processes of some embodiments, retrieve instructions to execute and/or data to process from components such as system memory 415, ROM 420, and permanent storage device 425. Such instructions and data may be passed over bus 405.

System memory 415 may be a volatile read-and-write memory, such as a random access memory (RAM). The system memory may store some of the instructions and data that the processor uses at runtime. The sets of instructions and/or data used to implement some embodiments may be stored in the system memory 415, the permanent storage device 425, and/or the read-only memory 420. ROM 420 may store static data and instructions that may be used by processor 410 and/or other elements of the computer system.

Permanent storage device 425 may be a read-and-write memory device. The permanent storage device may be a non-volatile memory unit that stores instructions and data even when computer system 400 is off or unpowered. Computer system 400 may use a removable storage device and/or a remote storage device as the permanent storage device.

Input devices 430 may enable a user to communicate information to the computer system and/or manipulate various operations of the system. The input devices may include keyboards, cursor control devices, audio input devices and/or video input devices. Output devices 435 may include printers, displays, audio devices, etc. Some or all of the input and/or output devices may be wirelessly or optically connected to the computer system 400.

Audio processor 440 may process and/or generate audio data and/or instructions. The audio processor may be able to receive audio data from an input device 430 such as a microphone. The audio processor 440 may be able to provide audio data to output devices 440 such as a set of speakers. The audio data may include digital information and/or analog signals. The audio processor 440 may be able to analyze and/or otherwise evaluate audio data (e.g., by determining qualities such as signal to noise ratio, dynamic range, etc.). In addition, the audio processor may perform various audio processing functions (e.g., equalization, compression, etc.).

The video processor 445 (or graphics processing unit) may process and/or generate video data and/or instructions. The video processor may be able to receive video data from an input device 430 such as a camera. The video processor 445 may be able to provide video data to an output device 440 such as a display. The video data may include digital information and/or analog signals. The video processor 445 may be able to analyze and/or otherwise evaluate video data (e.g., by determining qualities such as resolution, frame rate, etc.). In addition, the video processor may perform various video processing functions (e.g., contrast adjustment or normalization, color adjustment, etc.). Furthermore, the video processor may be able to render graphic elements and/or video.

Other components 450 may perform various other functions including providing storage, interfacing with external systems or components, etc.

Finally, as shown in Figure 4, computer system 400 may include one or more network interfaces 455 that are able to connect to one or more networks 460. For example, computer system 400 may be coupled to a web server on the Internet such that a web browser executing on computer system 400 may interact with the web server as a user interacts with an interface that operates in the web browser. Computer system 400 may be able to access one or more remote storages 470 and one or more external components 475 through the network interface 455 and network 460. The network interface(s) 455 may include one or more application programming interfaces (APIs) that may allow the computer system 400 to access remote systems and/or storages and also may allow remote systems and/or storages to access computer system 400 (or elements thereof).

As used in this specification and any claims of this application, the terms "computer", "server", "processor", and "memory" all refer to electronic devices. These terms exclude people or groups of people. As used in this specification and any claims of this application, the term "non-transitory storage medium" is entirely restricted to tangible, physical objects that store information in a form that is readable by electronic devices. These terms exclude any wireless or other ephemeral signals.

It should be recognized by one of ordinary skill in the art that any or all of the components of computer system 400 may be used in conjunction with some embodiments. Moreover, one of ordinary skill in the art will appreciate that many other system configurations may also be used in conjunction with some embodiments or components of some embodiments.

In addition, while the examples shown may illustrate many individual modules as separate elements, one of ordinary skill in the art would recognize that these modules may be combined into a single functional block or element. One of ordinary skill in the art would also recognize that a single module may be divided into multiple modules.

The foregoing relates to illustrative details of exemplary embodiments and modifications may be made without departing from the scope of the disclosure as defined by the following claims.

## Claims

1. A method for hierarchical scene segmentation of metadata-based enhancements in video content comprising:
extracting (210) scenes within video content based on a plurality of criteria;
defining (220) an association table comprising rankings of metadata segmentations;
selecting (240) metadata segmentations based on available bandwidth; and
providing (250) the metadata-based enhancements.

2. The method of claim 1, wherein plurality of criteria comprises camera shot based segmentation, color homogeneity segmentation, object based segmentation, and motion based segmentation.

3. The method of claim 1, wherein the association table provides a ranking of metadata-based enhancements for different video characteristics.

4. The method of claim 1, wherein the association table provides a ranking of metadata-based enhancements based on the video content to be enhanced.

5. The method of claim 1 further comprising computing (230) a global value per metadata characteristic within a segmentation, wherein the global value for a metadata characteristic is an averaged value over each corresponding segment for a characteristic to be enhanced by the metadata.

6. The method of claim 5, wherein the global value of a segmentation dictates the most appropriate characteristics to enhance at rendering time.

7. The method of claim 1, wherein the selecting is based on manufacture specifications of a receiving device.

8. The method of claim 1, wherein the providing includes a subset of the association table when the association table includes a ranking of metadata segmentations based on the video content and the selecting comprises selecting metadata based on a ranking of enhancement characteristics.

9. The method of claim 1, wherein the providing comprises including the metadata-based enhancements via supplemental enhancement information messages in a video stream.

10. An apparatus for hierarchical scene segmentation of metadata-based enhancements in video content comprising:
a processor for executing a set of instructions; and
a non-transitory medium that stores the set of instructions, wherein the set of instructions comprises the method of claims 1-9.

11. A method for rendering metadata-based enhancements in video comprising:
receiving an association table that defines a ranking of metadata-based enhancements, wherein the metadata-based enhancements are provided according to the method of claims 1-9; and
applying the metadata-based enhancements when rendering images of the video.

12. An apparatus for rendering metadata-based enhancements in video comprising:
a processor for executing a set of instructions; and
a non-transitory medium that stores the set of instructions, wherein the set of instructions comprises the method of claim 11.

13. Computer program comprising program code instructions executable by a processor for implementing the steps of a method according to at least one of claims 1 to 9.
